# EUROPEAN PATENT APPLICATION

(11) **EP 2 735 407 A2**
(43) Date of publication of application: **28.05.2014**
(21) Application number: 13189997.3
(22) Date of filing: 24.10.2013
(51) Int. Cl.: B25J 15/06

(54) **Robot system, suction hand, and method for producing product including workpiece**

(30) Priority: 27.11.2012 JP 2012258688
(71) Applicant: Kabushiki Kaisha Yaskawa Denki, Kitakyushu-shi, Fukuoka 806-0004 (JP)
(72) Inventor: Miyoshi, Tetsuya, Kitakyushu-shi, Fukuoka 806-0004 (JP)
(74) Representative: Viering, Jentschura & Partner Patent- und Rechtsanwälte

(57) **Abstract**

A robot system 100 includes a suction hand 2 and a multi-articular robot 1. The suction hand 2 is configured to hold a flexible sheet workpiece 200. The multi-articular robot 1 includes an arm 12 to which the suction hand 2 is mounted. The multi-articular robot 1 is configured to press the suction hand 2 against the flexible sheet workpiece 200 and make the suction hand 2 suck the flexible sheet workpiece 200, and is configured to move the arm 12 of the multi-articular robot 1 while turning the suction hand 2 relative to a surface 201a on which the flexible sheet workpiece 200 is placed in advance, so as to remove the flexible sheet workpiece 200 from the surface 201a and hold the flexible sheet workpiece 200.

## Description

### BACKGROUND OF THE INVENTION

### FIELD OF THE INVENTION

The present invention relates to a robot system, a suction hand, and a method for producing a product including a workpiece.

### DISCUSSION OF THE BACKGROUND

Conventionally, transfer robots are known to have robot hands provided with suction pads to suck to-be-transferred objects (see, for example, Japanese Unexamined Patent Application Publication No. 2011- 177848). Such transfer robot makes the suction pad of the robot hand closer to the to-be-transferred object from above the to-be-transferred object so as to suck the to-be-transferred object. Then, the transfer robot moves the robot hand upward (that is, lifts the to-be-transferred object up from the surface on which the to-be-transferred object is placed), so as to transfer the to-be-transferred object.

The contents of Japanese Unexamined Patent Application Publication No. 2011-177848 are incorporated herein by reference in their entirety.

Unfortunately, with the transfer robot recited in Japanese Unexamined Patent Application Publication No. 2011-177848, when the to-be-transferred object (workpiece) that the suction pad is to suck and hold is in the form of, for example, a flexible sheet placed on an adhesive surface (that is, when the robot lifts such to-be-transferred object up from the surface on which the to-be-transferred object is placed), the surface and the sheet to-be-transferred object can come into close contact with one another. This can disable the suction pad to hold the to-be-transferred object.

The present invention has been made in view of the above-described circumstances, and it is an object of the present invention to provide a robot system, a suction hand, and a method for producing a product including a workpiece that ensure holding of a flexible sheet workpiece even if the flexible sheet workpiece is placed on a surface with which the flexible sheet workpiece easily makes close contact.

### SUMMARY OF THE INVENTION

According to one aspect of the present invention, a robot system 100 includes a suction hand 2 and a multi-articular robot 1. The suction hand 2 is configured to hold a flexible sheet workpiece 200. The multi-articular robot 1 includes an arm 12 to which the suction hand 2 is mounted. The multi-articular robot 1 is configured to press the suction hand 2 against the flexible sheet workpiece 200 and make the suction hand 2 suck the flexible sheet workpiece 200, and is configured to move the arm 12 of the multi-articular robot 1 while turning the suction hand 2 relative to a surface 201a on which the flexible sheet workpiece 200 is placed in advance, so as to remove the flexible sheet workpiece 200 from the surface 201a and hold the flexible sheet workpiece 200.

In the robot system according to the one aspect of the present invention, as described above, the multi-articular robot presses the suction hand against a workpiece and makes the suction hand suck the workpiece. Then, the multi-articular robot moves the arm of the multi-articular robot while turning the suction hand relative to the surface on which the workpiece is placed in advance, so as to remove the workpiece from the surface and hold the workpiece. This ensures removal of the workpiece from an edge side of the workpiece, and requires a smaller amount of force to remove the workpiece from the surface than the force required when the suction hand sucks the workpiece and then moves upward (in a direction orthogonal to the surface) to hold the workpiece. This, as a result, ensures holding of a flexible sheet workpiece even if the flexible sheet workpiece is placed on a surface with which the flexible sheet workpiece easily makes close contact.

According to another aspect of the present invention, a suction hand 2 is applicable to a robot system 100. The robot system 100 includes a suction hand 2 and a multi-articular robot 1. The suction hand 2 is configured to hold a flexible sheet workpiece 200. The multi-articular robot 1 includes an arm 12 to which the suction hand 2 is mounted. The multi-articular robot 1 is configured to press the suction hand 2 against the flexible sheet workpiece 200 and make the suction hand 2 suck the flexible sheet workpiece 200, and is configured to move the arm 12 of the multi-articular robot 1 while turning the suction hand 2 relative to a surface 201a on which the flexible sheet workpiece 200 is placed in advance, so as to remove the flexible sheet workpiece 200 from the surface 201a and hold the flexible sheet workpiece 200.

In the suction hand according to this aspect of the present invention, as described above, the multi-articular robot presses the suction hand against a workpiece and makes the suction hand suck the workpiece. Then, the multi-articular robot moves the arm of the multi-articular robot while turning the suction hand relative to the surface on which the workpiece is placed in advance, so as to remove the workpiece from the surface and hold the workpiece. This ensures removal of the workpiece from an edge side of the workpiece, and requires a smaller amount of force to remove the workpiece from the surface than the force required when the suction hand sucks the workpiece and then moves upward (in a direction orthogonal to the surface) to hold the workpiece. This, as a result, ensures a suction hand that is capable of holding a flexible sheet workpiece even if the flexible sheet workpiece is placed on a surface with which the flexible sheet workpiece easily makes close contact.

According to the other aspect of the present invention, a method for producing a product 203 including a workpiece includes pressing a suction hand 2 configured to hold a flexible sheet workpiece 200 against the flexible sheet workpiece 200 so as to make the suction hand 2 suck the flexible sheet workpiece 200. An arm 12 of a multi-articular robot 1 is moved while the suction hand 2 is turned relative to a surface 201a on which the flexible sheet workpiece 200 is placed in advance so that the flexible sheet workpiece 200 is removed from the surface 201a and held.

The method for producing a product including a workpiece according to the other aspect of the present invention includes moving the arm of the multi-articular robot while turning the suction hand relative to the surface on which the workpiece is placed in advance so as to remove the workpiece from the surface and hold the workpiece. This ensures removal of the workpiece from an edge side of the workpiece, and requires a smaller amount of force to remove the workpiece from the surface than the force required when the suction hand sucks the workpiece and then moves upward (in a direction orthogonal to the surface) to hold the workpiece. This, as a result, ensures such a method for producing a product including a workpiece that ensures holding of a flexible sheet workpiece even if the flexible sheet workpiece is placed on a surface with which the flexible sheet workpiece easily makes close contact.

The above-described configurations ensure holding of a workpiece even if the workpiece is placed on a surface with which the workpiece easily makes close contact.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:
FIG. 1 is an overall view of a robot system according to an embodiment of the present invention;
FIG. 2 is an overall view of a robot of the robot system according to the embodiment of the present invention;
FIG. 3 is a front view of a suction hand of the robot system according to the embodiment of the present invention;
FIG. 4 is a perspective view of a suction hand of the robot system according to the embodiment of the present invention;
FIG. 5 is another perspective view, from a different direction, of the suction hand shown in FIG. 4;
FIG. 6 illustrates a workpiece to be sucked by the suction hand of the robot system according to the embodiment of the present invention;
FIG. 7 is a block diagram of the robot system according to the embodiment of the present invention;
FIG. 8 illustrates an operation of the suction hand of the robot system according to the embodiment of the present invention in removing and holding the workpiece;
FIG. 9 illustrates a state in which the suction hand of the robot system according to the embodiment of the present invention is being pressed against the workpiece;
FIG. 10 illustrates a state in which the suction hand shown in FIG. 9 is making a turn so as to suck the workpiece onto the suction hand;
FIG. 11 illustrates a state in which the suction hand shown in FIG. 10 is making a turn so as to suck the workpiece onto the suction hand;
FIG. 12 illustrates an operation of the suction hand of the robot system according to the embodiment of the present invention in attaching the workpiece to a product;
FIG. 13 illustrates a state in which the suction hand (workpiece) of the robot system according to the embodiment of the present invention is being pressed against the product;
FIG. 14 illustrates a state in which the suction hand shown in FIG. 13 is making a turn so as to attach the workpiece to the product;
FIG. 15 illustrates a state in which the suction hand shown in FIG. 14 is making a turn so as to attach the workpiece to the product;
FIG. 16 is a view of a suction hand of a robot system according to a first modification of the embodiment of the present invention;
FIG. 17 is a view of a suction hand of a robot system according to a second modification of the embodiment of the present invention; and
FIG. 18 is a view of a suction hand of a robot system according to a third modification of the embodiment of the present invention.

### DESCRIPTION OF THE EMBODIMENTS

The embodiments will now be described with reference to the accompanying drawings, wherein like reference numerals designate corresponding or identical elements throughout the various drawings.

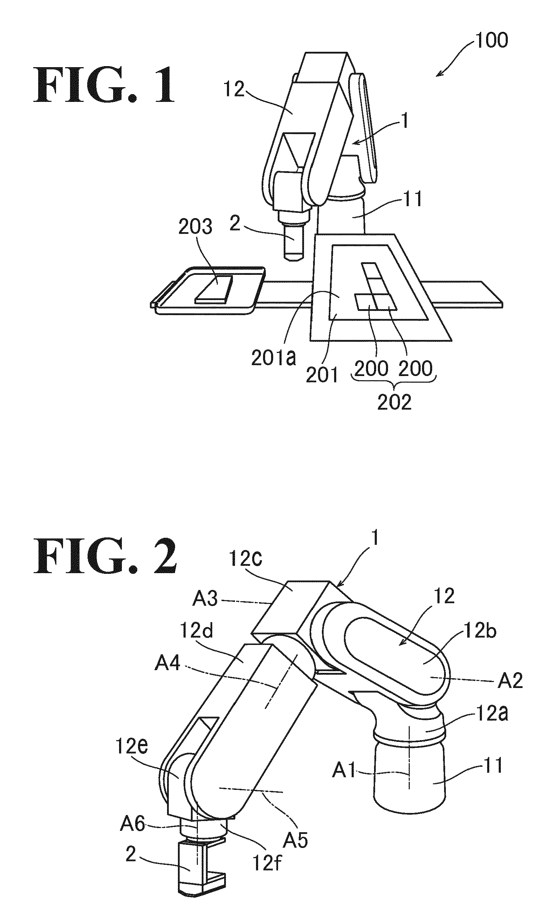

First, by referring to FIGs. 1 to 11, a configuration of a robot system 100 according to this embodiment will be described.

As shown in FIG. 1, in this embodiment, the robot system 100 includes a vertical multi-articular robot 1 and a suction hand 2. The suction hand 2 is disposed on the robot 1 to hold a flexible sheet workpiece 200. The robot 1 is an example of the "multi-articular robot".

The workpiece 200 is placed on a surface 201a of a sheet workpiece support 201. The workpiece support 201 is in close contact with the workpiece 200. On the surface 201a of the workpiece support 201, a plurality of workpieces 200 are disposed. Specifically, one larger workpiece 202 is cut into a plurality of separate workpieces 200. Each workpiece 200 is to be mounted (attached) to a product 203. The product 203 is disposed adjacent the workpiece support 201. Also each workpiece 200 has a rectangular shape in plan view. The product 203 is an example of the "workpiece receiver".

As shown in FIGs. 1 and 2, the robot 1 includes a base 11 and an arm 12 mounted to the base 11. The arm 12 has six degrees of freedom.

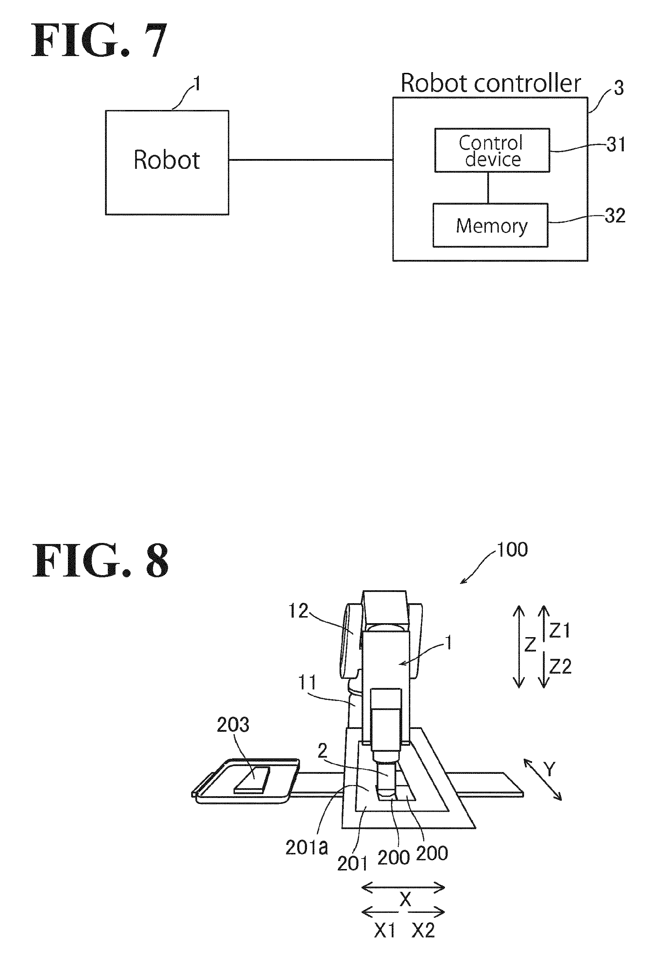

As shown in FIG. 2, the arm 12 has a plurality of arm structures. An arm structure 12a is coupled to the base 11 in a rotatable manner about a rotation axis A1, which is perpendicular to the installation surface of the robot 1. An arm structure 12b is coupled to the arm structure 12a in a rotatable manner about a rotation axis A2, which is perpendicular to the rotation axis A1. An arm structure 12c is coupled to the arm structure 12b in a rotatable manner about a rotation axis A3, which is parallel to the rotation axis A2. An arm structure 12d is coupled to the arm structure 12c in a rotatable manner about a rotation axis A4, which is perpendicular to the rotation axis A3. An arm structure 12e is coupled to the arm structure 12d in a rotatable manner about a rotation axis A5, which is perpendicular to the rotation axis A4. An arm structure 12f is coupled to the arm structure 12e in a rotatable manner about a rotation axis A6, which is perpendicular to the rotation axis A5. It is noted that "parallel" and "perpendicular", as used herein, are not only intended to mean precisely "parallel" and "perpendicular", respectively, but also intended more broadly to encompass slight differences from being "parallel" or "perpendicular". Each of the rotation axes A1 to A6 is equipped with a servo motor (joint). Each servo motor includes an encoder to detect the rotation position of the servo motor. Also each servo motor is coupled to a robot controller 3 (see FIG. 7) so that each servo motor operates based on a command from the robot controller 3.

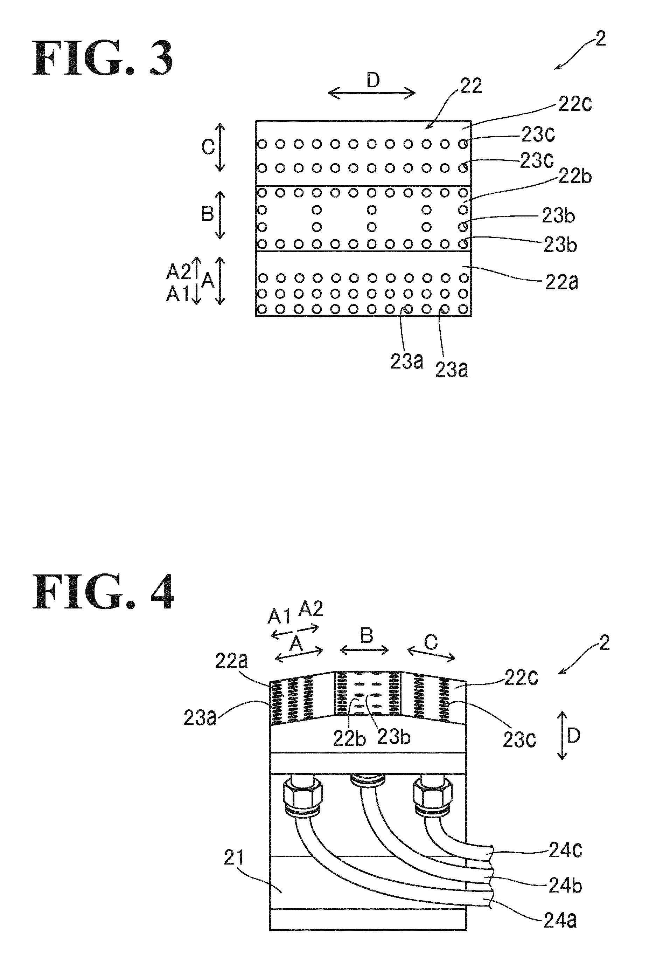

As shown in FIGs. 3 to 5, the suction hand 2 includes a mounting portion 21 mounted to the arm structure 12f of the robot 1. The mounting portion 21 has an approximate U shape. Here, in this embodiment, the suction hand 2 (which is disposed at the distal end side of the mounting portion 21) includes a planar holder 22a, a planar holder 22b, and a planar holder 22c. The holder 22a, the holder 22b, and the holder 22c are oriented in directions orthogonal to each other. Specifically, the holder 22a is oriented in the A direction, while the holder 22b is oriented in the B direction, which is orthogonal to the A direction. The holder 22c is oriented in the C direction, which is orthogonal to the A direction and the B direction. Each of the holder 22a, the holder 22b, and the holder 22c has a rectangular shape in plan view. Then, the entire combination (holder 22) of the holder 22a, the holder 22b, and the holder 22c has a rectangular shape that corresponds to the rectangular shape of the workpiece 200. The holder 22a is an example of the "first planar holder". The holder 22b and the holder 22c are examples of the "second planar holder".

Also in this embodiment, the holder 22a, the holder 22b, and the holder 22c respectively include suction holes 23a, suction holes 23b, and suction holes 23c. Through the suction holes 23a, the suction holes 23b, and the suction holes 23c, air is taken in so that the holder 22a, the holder 22b, and the holder 22c suck the workpiece 200. The suction holes 23a, the suction holes 23b, and the suction holes 23c are respectively coupled with suction tubes 24a, 24b, and 24c to take in air. The suction tubes 24a, 24b, and 24c are coupled to respective electromagnetic valves, not shown, so that the robot controller 3 (see FIG. 7) controls suction and release of the air through the suction holes 23a, the suction holes 23b, and the suction holes 23c independently.

Also in this embodiment, as shown in FIG. 3, the suction holes 23a, the suction holes 23b, and the suction holes 23c are provided in plural. A plan view shows that the suction holes 23a of the holder 22a are disposed at the edge side of the holder 22a corresponding to the edge side of the workpiece 200 that is to be first removed from the surface 201a of the workpiece support 201 (which is the side in the arrow A1 direction). Specifically, in plan view, the suction holes 23a of the holder 22a are disposed at the arrow A1 direction side of the holder 22a in a matrix (of 3 columns by 12 rows in this embodiment). The suction holes 23b of the holder 22b are disposed on the circumference of the holder 22b, and some of the suction holes 23b are disposed across the holder 22b (along the B direction) to connect the suction holes 23b disposed on the circumference, resulting in a ladder shape in plan view. The suction holes 23c of the holder 22c form two columns (a matrix of 2 columns by 12 rows) in plan view along the D direction, which is orthogonal to the C direction.

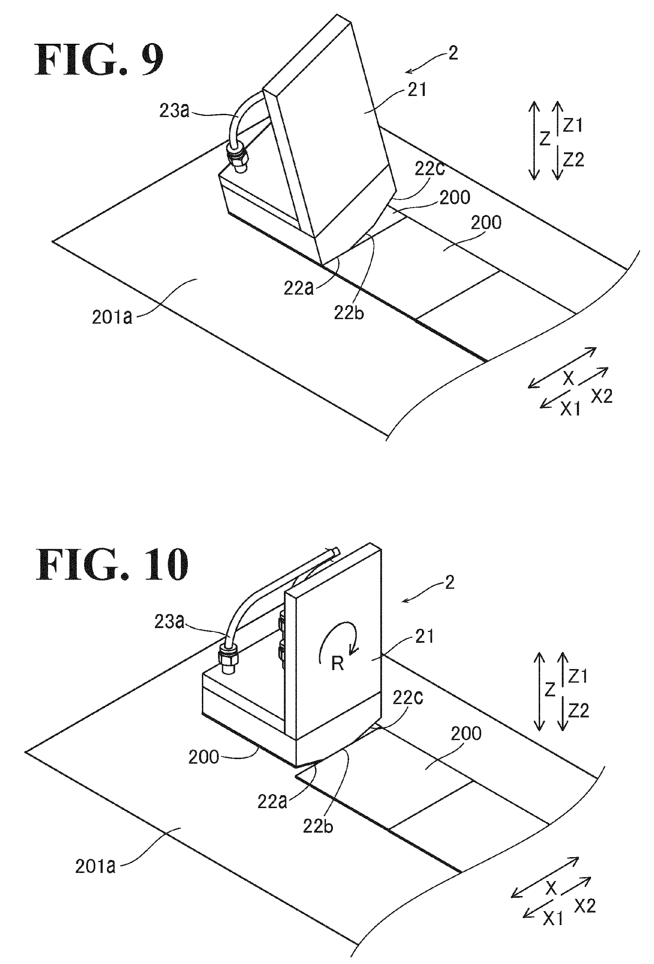

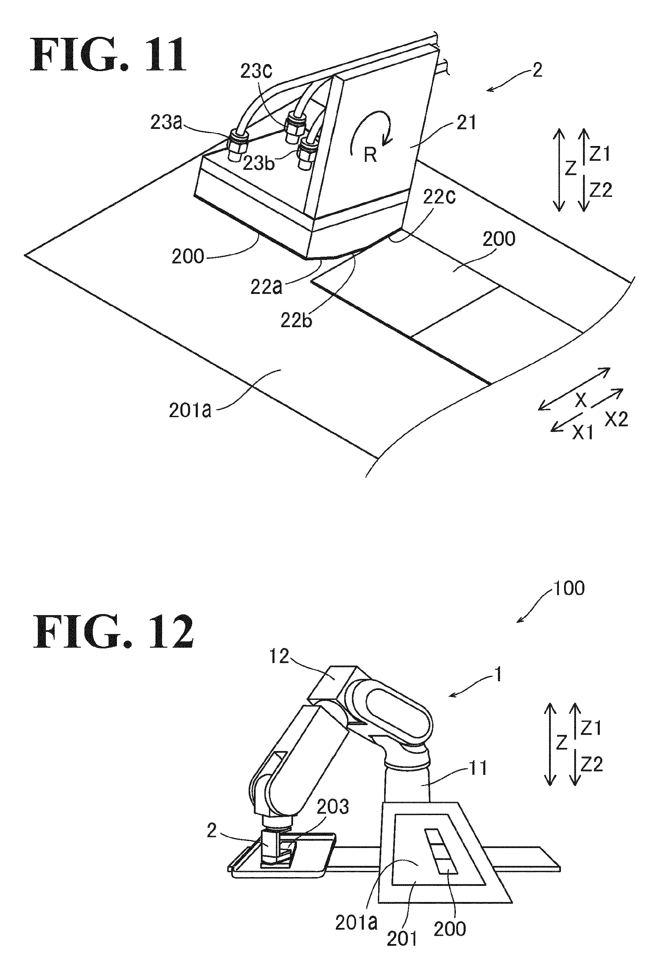

Then, in this embodiment, as shown in FIGs. 9 to 11, the robot 1 presses the suction hand 2 against the workpiece 200 and makes the suction hand 2 suck the workpiece 200, and then moves the arm 12 of the robot 1 while turning the suction hand 2 relative to the surface 201a, on which the workpiece 200 is placed in advance, so as to remove the workpiece 200 from the surface 201a and hold the workpiece 200. Specifically, the robot 1 presses the holder 22a against the workpiece 200 and takes in air through the suction holes 23a, thereby sucking the workpiece 200 onto the holder 22a (see FIG. 9). Then, the robot 1 moves the arm 12 of the robot 1 while turning the suction hand 2 relative to the surface 201a, on which the workpiece 200 is placed in advance, thereby taking in air through the suction holes 23b. Thus, both the holder 22a and the holder 22b suck the workpiece 200 (see FIG. 10). Then, the robot 1 moves the arm 12 of the robot 1 while turning the suction hand 2, thereby taking in air through the suction holes 23c. Thus, all the holder 22a, the holder 22b, and the holder 22c suck the workpiece 200 (see FIG. 11), thereby removing the workpiece 200 from the surface 201a and holding the workpiece 200. The robot 1 removes the workpiece 200 from one edge side of the workpiece 200 (which is the side in the arrow X1 direction as shown in FIGs. 9 to 11), and holds the workpiece 200.

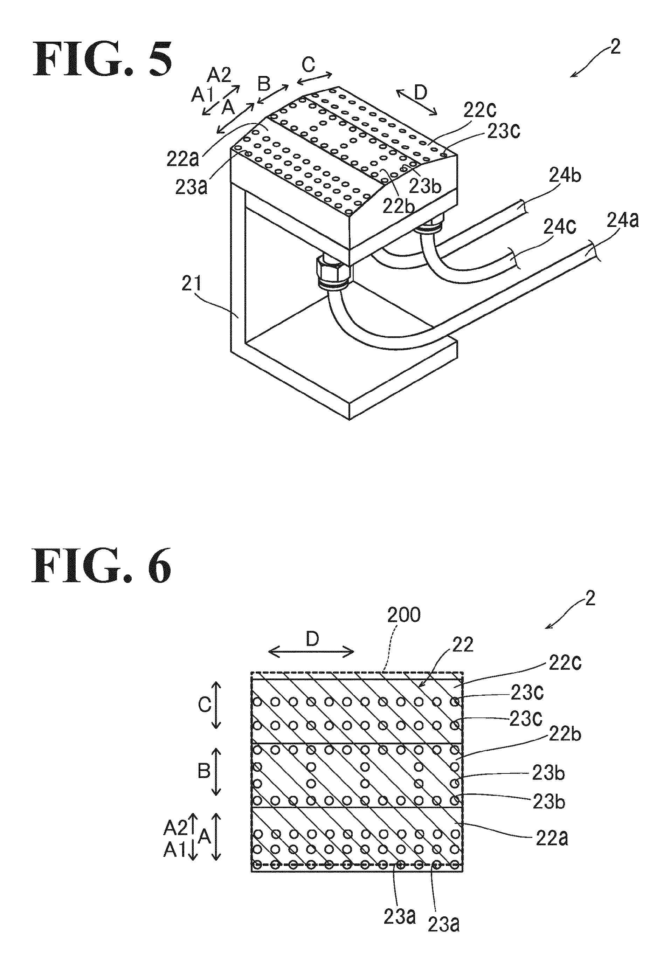

Also in this embodiment, as shown in FIG. 6, the suction hand 2 holds the workpiece 200 with the suction holes 23a partially overlapping the workpiece 200 in plan view (see the slanted lines shown in FIG. 6). Specifically, the suction hand 2 holds the workpiece 200 such that approximately a half part of each of the suction holes 23a disposed at the arrow A1 direction side overlaps the workpiece 200 in plan view.

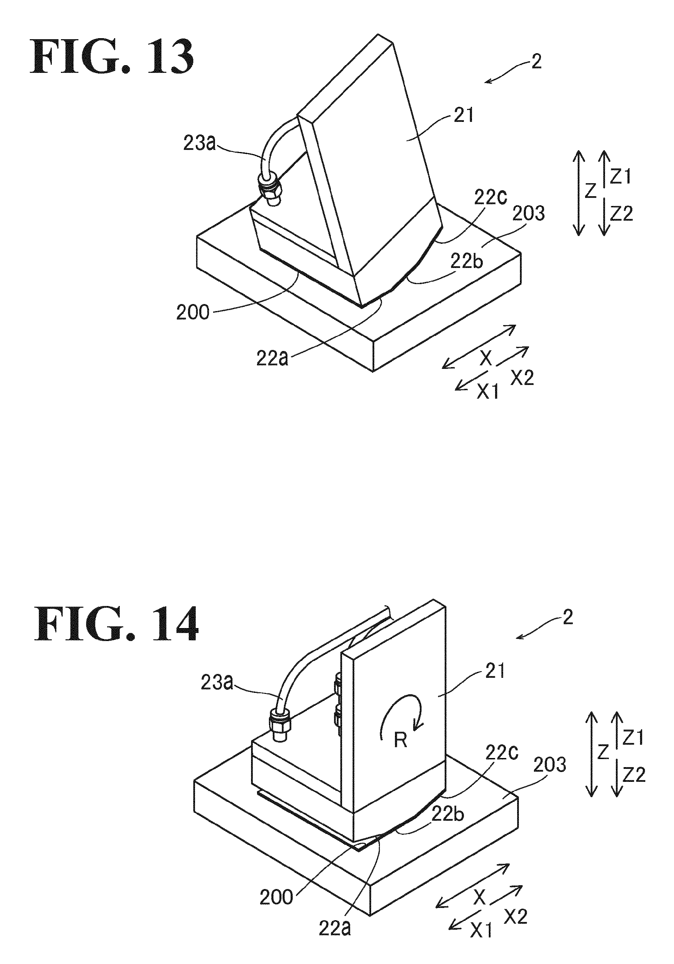

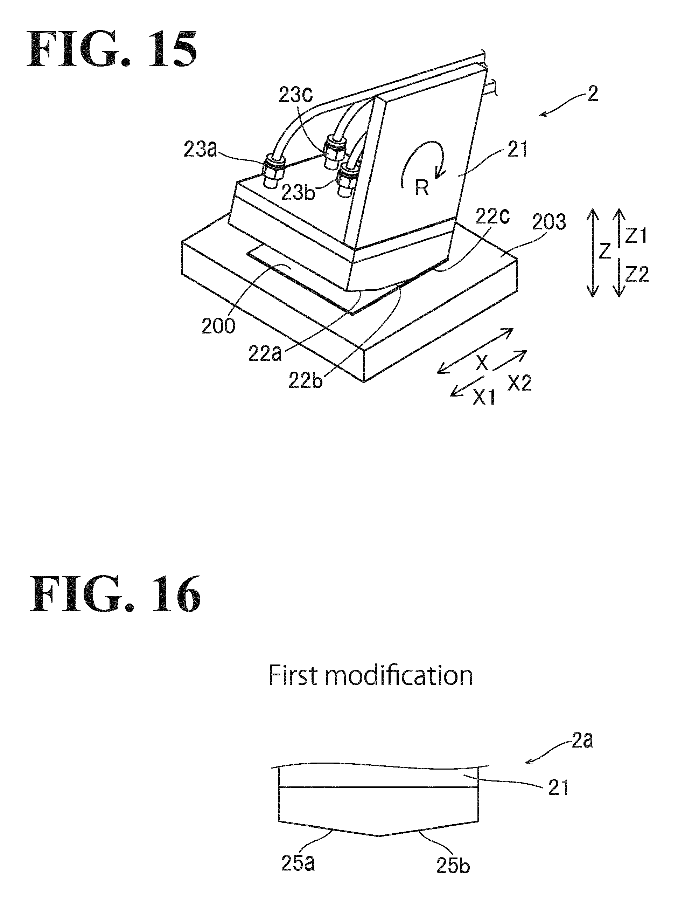

Also in this embodiment, as shown in FIGs. 13 to 15, the robot 1 moves the arm 12 of the robot 1 so as to press the workpiece 200 held by the suction hand 2 onto the product 203, on which the workpiece 200 is to be disposed. Then, the robot 1 moves the arm 12 of the robot 1 while turning the suction hand 2 relative to the product 203, and releases air through the suction holes 22a, 22b, and 22c toward the workpiece 200, thereby removing the workpiece 200 from the suction hand 2 and placing the workpiece 200 onto the product 203. Specifically, the robot 1 presses the holder 22a (the workpiece 200) of the suction hand 2 against the product 203 and releases air through the suction holes 23a, thereby attaching the workpiece 200 (the part of the workpiece 200 sucked on the holder 22a) onto the product 203 (see FIG. 13). Then, the robot 1 moves the arm 12 of the robot 1 while turning the suction hand 2 relative to the product 203 (see FIG. 14), and releases air through the suction holes 23b, thereby attaching the workpiece 200 (the part of the workpiece 200 sucked on the holder 22b) to the product 203. Then, the robot 1 moves the arm 12 of the robot 1 while turning the suction hand 2, and releases air through the suction holes 23c, thereby attaching the workpiece 200 (the part of the workpiece 200 sucked on the holder 22c) to the product 203 (see FIG. 15).

As shown in FIG. 7, the robot system 100 is coupled with the robot 1 and the robot controller 3. The robot controller 3 controls overall operation of the robot system 100. Also the robot controller 3 includes a control device 31 and a memory 32.

Next, by referring to FIGs. 8 to 15, description will be made with regard to a holding operation and an attachment operation upon the workpiece 200 (that is, a method for producing the product 203) by the robot system 100 according to this embodiment. In FIGs. 9 to FIG. 11 and FIGs. 13 to FIG. 15, the arm 12 of the robot 1 is not shown, so that only the suction hand 2 is shown.

### (Holding operation upon the workpiece 200)

First, as shown in FIG. 8, the robot 1 moves its arm 12 to position the suction hand 2 over the workpiece 200 (in the arrow Z1 direction). Next, as shown in FIG. 9, the robot 1 moves its arm 12 downward (in the arrow Z2 direction), thereby pressing the holder 22a of the suction hand 2 against the workpiece 200 and taking in air through the suction holes 23a. Thus, the holder 22a sucks the workpiece 200. Then, as shown in FIG. 10, the robot 1 moves its arm 12 while turning the suction hand 2 in the arrow R direction relative to the surface 201a, on which the workpiece 200 is placed in advance. Then, the robot 1 takes in air through the suction holes 23b, and thus both the holder 22a and the holder 22b suck the workpiece 200. Then, as shown in FIG. 11, the robot 1 moves its arm 12 while turning the suction hand 2 in the arrow R direction relative to the surface 201a, and takes in air through the suction holes 23c. Thus, all the holder 22a, the holder 22b, and the holder 22c suck the workpiece 200. Then, the robot 1 moves its arm 12 upward to remove the workpiece 200 from the surface 201a. Thus, the holding operation by the suction hand 2 upon the workpiece 200 ends.

### (Attachment operation upon the workpiece 200)

First, as shown in FIG. 12, the robot 1 moves its arm 12 to position the suction hand 2 over the product 203 (in the arrow Z1 direction). Next, as shown in FIG. 13, the robot 1 moves its arm 12 downward (in the arrow Z2 direction), thereby pressing the holder 22a of the suction hand 2 against the product 203. Then, air is released through the suction holes 23a of the holder 22a, and as shown in FIG. 14, the robot 1 moves its arm 12 while turning the suction hand 2 in the arrow R direction relative to the product 203. Thus, the workpiece 200 is removed from the holder 22a. Then, air is released through the suction holes 23b of the holder 22b, and as shown in FIG. 15, the robot 1 moves its arm 12 while turning the suction hand 2 in the arrow R direction relative to the product 203. Thus, the workpiece 200 is removed from the holder 22b. Then, air is released through the suction holes 23c, and the robot 1 moves its arm 12 upward. Thus, the workpiece 200 is removed from the holder 22c. Thus, the attachment operation by the product 203 upon the workpiece 200 ends.

In this embodiment, as described above, the robot 1 presses the suction hand 2 against the workpiece 200 and makes the suction hand 2 suck the workpiece 200. Then, the robot 1 moves the arm 12 of the robot 1 while turning the suction hand 2 relative to the surface 201a, on which the workpiece 200 is placed in advance, thereby removing the workpiece 200 from the surface 201a and holding the workpiece 200. This ensures removal of the workpiece 200 from an edge side of the workpiece 200, and requires a smaller amount of force to remove the workpiece 200 from the surface 201a than the force required when the suction hand 2 sucks the workpiece 200 and then moves upward (in the direction orthogonal to the surface 201a) to hold the workpiece 200. This, as a result, ensures holding of the flexible sheet workpiece 200 even if the flexible sheet workpiece 200 is placed on a surface with which the flexible sheet workpiece 200 easily makes close contact.

Also in this embodiment, as described above, the robot 1 removes the workpiece 200 from one edge side of the workpiece 200 to hold the workpiece 200. This facilitates removal of the workpiece 200 from the surface 201a, as opposed to removal of the workpiece 200 from its center portion.

Also in this embodiment, as described above, the suction hand 2 includes the planar holder 22a, the planar holder 22b, and the planar holder 22c. The holder 22a, the holder 22b, and the holder 22c are oriented in directions orthogonal to each other. The robot 1 presses the holder 22a against the workpiece 200 and makes the holder 22a suck the workpiece 200. Then, the robot 1 moves the arm 12 of the robot 1 while turning the suction hand 2 relative to the surface 201a, on which the workpiece 200 is placed in advance, thereby making all the holder 22a, the holder 22b, and the holder 22c suck the workpiece 200 to remove the workpiece 200 from the surface 201a and hold the workpiece 200. This facilitates holding of the workpiece 200 even when the workpiece 200 is in close contact with the surface 201 a, as opposed to the case of the holder of the suction hand 2 sucking the entire surface of the workpiece 200 and then moving upward in an attempt to remove the workpiece 200 from the surface 201a and hold the workpiece 200.

Also in this embodiment, as described above, the holder 22a, the holder 22b, and the holder 22c respectively include the suction holes 23a, the suction holes 23b, and the suction holes 23c, through which air is taken in so that the holder 22a, the holder 22b, and the holder 22c suck the workpiece 200. The robot 1 presses the holder 22a against the workpiece 200 and takes in air through the suction holes 23a, thereby sucking the workpiece 200 onto the holder 22a. Then, the robot 1 moves the arm 12 of the robot 1 while turning the suction hand 2 relative to the surface 201a, on which the workpiece 200 is placed in advance, thereby taking in air through the suction holes 23b (the suction holes 23c). Thus, all the holder 22a, the holder 22b, and the holder 22c suck the workpiece 200 to remove the workpiece 200 from the surface 201a and hold the workpiece 200. This ensures that the workpiece 200 is absorbed by air, resulting in facilitated removal of the workpiece 200 from the surface 201 a and holding of the workpiece 200.

Also in this embodiment, as described above, the suction hand 2 includes a plurality of suction holes 23a, and the plurality of suction holes 23a are disposed at the edge side of the holder 22a corresponding to the edge side of the workpiece 200 that is to be first removed from the surface 201a. This ensures that in removing the workpiece 200 from the surface 201a, the part of the workpiece 200 that is to be removed first is absorbed by air. This, in turn, further facilitates removal of the workpiece 200 from the surface 201a and holding of the workpiece 200.

Also in this embodiment, as described above, the suction hand 2 holds the workpiece 200 with the suction holes 23a partially overlapping the workpiece 200 in plan view. This ensures that air is taken in through some of the suction holes 23a that are not blocked by the workpiece 200, as opposed to the workpiece 200 blocking all the plurality of suction holes 23a. This, as a result, ensures greater suction force to suck and hold the workpiece 200.

Also in this embodiment, as described above, the holder 22 (the entire combination of the holder 22a, the holder 22b, and the holder 22c) of the suction hand 2 has a rectangular shape that corresponds to the shape of the workpiece 200. This ensures that the holder 22 of the suction hand 2 holds the entire surface of the workpiece 200, which is a more stable state of holding the workpiece 200 than the state when the holder of the suction hand 2 is smaller than the workpiece 200. This also eliminates or minimizes removal of a plurality of workpieces 200 at a time when they are disposed next to each other (see FIG. 1), as opposed to the case where the holder of the suction hand 2 is larger than the workpiece 200.

Also in this embodiment, as described above, the robot 1 moves the arm 12 of the robot 1 so as to press the workpiece 200 held by the suction hand 2 onto the product 203, on which the workpiece 200 is to be placed. Then, the robot 1 moves the arm 12 of the robot 1 while turning the suction hand 2 relative to the product 203, thereby removing the workpiece 200 from the suction hand 2 and placing the workpiece 200 onto the product 203. This facilitates removal of the workpiece 200 from the suction hand 2, as opposed to the case where the suction hand 2 holding the workpiece 200 moves downward to press the workpiece 200 onto the product 203, and then moves upward. This, as a result, ensures reliable placement (attachment) of the workpiece 200 onto the product 203.

Also in this embodiment, as described above, the robot 1 moves the arm 12 of the robot 1 so as to press the workpiece 200 held by the suction hand 2 onto the product 203, on which the workpiece 200 is to be placed. Then, the robot 1 moves the arm 12 of the robot 1 while turning the suction hand 2 relative to the product 203, and releases air through the suction holes 23a, the suction holes 23b, and the suction holes 23c toward the workpiece 200, thereby removing the workpiece 200 from the suction hand 2 and placing the workpiece 200 onto the product 203. This ensures removal of the workpiece 200 from the holder 22a, the holder 22b, and the holder 22c by the force of air, and ensures reliable placement (attachment) of the workpiece 200 onto the product.

Obviously, numerous modifications and variations of the present invention are possible in light of the above teachings. It is therefore to be understood that within the scope of the appended claims, the invention may be practiced otherwise than as specifically described herein.

For example, while in the above-described embodiment the arm of the robot has been illustrated as having six degrees of freedom, the arm of the robot may have other than six degrees of freedom (such as five degrees of freedom and seven degrees of freedom).

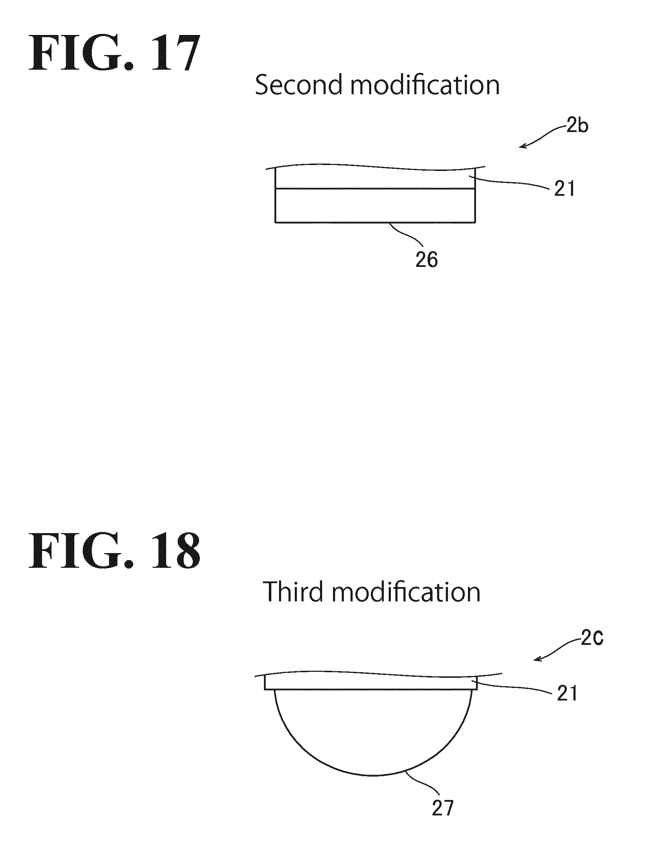

Also in the above-described embodiment, the suction hand includes three planar holders (the holder 22a, the holder 22b, and the holder 22c, see FIGs. 3 to 5) oriented in directions orthogonal to each other. It is also possible for a suction hand 2a to include, for example, two planar holders 25a and 25b oriented in directions orthogonal to one another as in a first modification shown in FIG. 16. The holders 25a and 25b are respectively examples of the "first planar holder" and the "second planar holder". It is also possible for a suction hand 2b to include a single planar holder 26 as in a second modification shown in FIG. 17. Further, it is also possible for a suction hand 2c to include a semi-hemispheric holder 27 as in a third modification shown in FIG. 18.

Also in the above-described embodiment, the holder of the suction hand has been illustrated as including suction holes through which air is taken in so that the workpiece is sucked onto the holder. The suction holes, however, may not necessarily be provided when, for example, the suction hand is capable of holding the workpiece without suction force.

Also in the above-described embodiment, a plurality of suction holes 23a are disposed at the edge side of the holder 22a of the suction hand 2 corresponding to the edge side of the workpiece 200 that is to be first removed from the surface 201a (see FIG. 6). The suction holes 23a may also be disposed over the entire surface of the holder 22a, for example.

Also in the above-described embodiment, the suction hand has been illustrated as holding the workpiece with the workpiece partially overlapping the suction holes (the suction holes 23a) in plan view. The suction hand may also hold the workpiece with the workpiece overlapping all the suction holes, for example.

Also in the above-described embodiment, the workpiece has been illustrated as having a rectangular shape. The workpiece may also have a shape other than a rectangular shape. In this case, the holder of the suction hand preferably has a shape corresponding to the shape of the workpiece.

Also in the above-described embodiment, the removal of the workpiece 200 from the suction hand 2 and placement of the workpiece 200 onto the product 203 are performed similarly to the removal of the workpiece 200, that is, the order: holder 22a, holder 22b, and holder 22c is used to attach the workpiece 200 to the product 203 by pressing the workpiece 200 (the holder 22a, the holder 22b, and the holder 22c) against the product 203. It is also possible to use the (reverse) order: holder 22c, holder 22b, and holder 22a to attach the workpiece 200 to the product 203 by pressing the workpiece 200 (the holder 22a, the holder 22b, and the holder 22c) against the product 203.

Also in the above-described embodiment, the holder (workpiece) is pressed against the product while air is released from the suction holes toward the workpiece, so that the workpiece is removed from the suction hand and placed onto the product. The suction holes may not necessarily be provided on the holder when the workpiece can be removed from the suction hand without release of air (or when it is not necessary to release air through the suction portion).
- 1: Robot (multi-articular robot)
- 2, 2a, 2b, 2c: Suction hand
- 12: Arm
- 22a, 25a: Holder (first planar holder)
- 22b, 22c, 25b: Holder (second planar holder)
- 23a: Suction hole (first suction hole)
- 23b, 23c: Suction hole (second suction hole)
- 26, 27: Holder
- 100: Robot system
- 200: Workpiece
- 201a: Surface
- 203: Product (workpiece support)

## Claims

1. A robot system 100, **characterized by**:
a suction hand 2 configured to hold a flexible sheet workpiece 200; and
a multi-articular robot 1 comprising an arm 12 to which the suction hand 2 is mounted, the multi-articular robot 1 being configured to press the suction hand 2 against the flexible sheet workpiece 200 and make the suction hand 2 suck the flexible sheet workpiece 200, and configured to move the arm 12 of the multi-articular robot 1 while turning the suction hand 2 relative to a surface 201a on which the flexible sheet workpiece 200 is placed in advance, so as to remove the flexible sheet workpiece 200 from the surface 201a and hold the flexible sheet workpiece 200.

2. The robot system 100 according to claim 1, wherein the multi-articular robot 1 is configured to remove the flexible sheet workpiece 200 from one edge side of the flexible sheet workpiece 200 so as to hold the flexible sheet workpiece 200.

3. The robot system 100 according to claim 2,
wherein the suction hand 2 comprises
a first planar holder 22a, and
a second planar holder 22b, 22c oriented in a direction orthogonal to a direction in which the first planar holder 22a is oriented, and
wherein the multi-articular robot 1 is configured to press the first planar holder 22a against the flexible sheet workpiece 200 so as to make the first planar holder 22a suck the flexible sheet workpiece 200, and configured to move the arm 12 of the multi-articular robot 1 while turning the suction hand 2 relative to the surface 201a on which the flexible sheet workpiece 200 is placed in advance, so as to make both the first planar holder 22a and the second planar holder 22b, 22c suck the flexible sheet workpiece 200 to remove the flexible sheet workpiece 200 from the surface 201a and hold the flexible sheet workpiece 200.

4. The robot system 100 according to claim 3,
wherein the first planar holder 22a comprises a first suction hole 23a through which air is taken in so that the flexible sheet workpiece 200 is sucked onto the first planar holder 22a,
wherein the second planar holder 22b, 22c comprises a second suction hole 23b, 23c through which air is taken in so that the flexible sheet workpiece 200 is sucked onto the second planar holder 22b, 22c, and
wherein the multi-articular robot 1 is configured to press the first planar holder 22a against the flexible sheet workpiece 200 and take in air through the first suction hole 23a so as to make the first planar holder 22a suck the flexible sheet workpiece 200, configured to move the arm 12 of the multi-articular robot 1 while turning the suction hand 2 relative to the surface 201a on which the flexible sheet workpiece 200 is placed in advance, so as to take in air through the second suction hole 23b, 23c and make both the first planar holder 22a and the second planar holder 22b, 22c suck the flexible sheet workpiece 200 to remove the flexible sheet workpiece 200 from the surface 201a and hold the flexible sheet workpiece 200.

5. The robot system 100 according to any one of claims 1 to 4,
wherein the suction hand 2 comprises a planar holder 22 comprising a plurality of suction holes 23a through which air is taken in so that the flexible sheet workpiece 200 is sucked onto the planar holder 22, and
wherein the plurality of suction holes 23a are disposed on the planar holder 22 at least at an edge side of the planar holder 22 corresponding to an edge side of the flexible sheet workpiece 200 that is to be first removed from the surface 201a.

6. The robot system 100 according to any one of claims 1 to 5,
wherein the suction hand 2 comprises a planar holder 22 comprising a plurality of suction holes 23a through which air is taken in so that the flexible sheet workpiece 200 is sucked onto the planar holder 22, and
wherein the suction hand 2 is configured to hold the flexible sheet workpiece 200 with the flexible sheet workpiece 200 partially overlapping the plurality of suction holes 23a in a plan view.

7. The robot system 100 according to any one of claims 1 to 6,
wherein the suction hand 2 comprises a planar holder 22 configured to suck the flexible sheet workpiece 200, and
wherein the planar holder 22 of the suction hand 2 comprises a shape corresponding to a shape of the flexible sheet workpiece 200.

8. The robot system 100 according to any one of claims 1 to 7, wherein the multi-articular robot 1 is configured to move the arm 12 of the multi-articular robot 1 so as to press the flexible sheet workpiece 200 held by the suction hand 2 onto a workpiece receiver 203 on which the flexible sheet workpiece 200 is to be disposed, and configured to move the arm 12 of the multi-articular robot 1 while turning the suction hand 2 relative to the workpiece receiver 203, so as to remove the flexible sheet workpiece 200 from the suction hand 2 and place the flexible sheet workpiece 200 onto the workpiece receiver 203.

9. The robot system 100 according to claim 8,
wherein the suction hand 2 comprises a planar holder 22 comprising a suction hole 23 through which air is taken in so that the flexible sheet workpiece 200 is sucked onto the planar holder 22, and
wherein the multi-articular robot 1 is configured to move the arm 12 of the multi-articular robot 1 so as to press the flexible sheet workpiece 200 held by the suction hand 2 onto the workpiece receiver 203, and configured to move the arm 12 of the multi-articular robot 1 while turning the suction hand 2 relative to the workpiece receiver 203 and release air through the suction hole 23 toward the flexible sheet workpiece 200, so as to remove the flexible sheet workpiece 200 from the suction hand 2 and place the flexible sheet workpiece 200 onto the workpiece receiver 203.

10. A suction hand 2 applicable to a robot system 100, the robot system 100 being **characterized by**:
a suction hand 2 configured to hold a flexible sheet workpiece 200; and
a multi-articular robot 1 comprising an arm 12 to which the suction hand 2 is mounted, the multi-articular robot 1 being configured to press the suction hand 2 against the flexible sheet workpiece 200 and make the suction hand 2 suck the flexible sheet workpiece 200, and configured to move the arm 12 of the multi-articular robot 1 while turning the suction hand 2 relative to a surface 201a on which the flexible sheet workpiece 200 is placed in advance, so as to remove the flexible sheet workpiece 200 from the surface 201a and hold the flexible sheet workpiece 200.

11. A method for producing a product 203 including a workpiece, **characterized by**:
pressing a suction hand 2 configured to hold a flexible sheet workpiece 200 against the flexible sheet workpiece 200 so as to make the suction hand 2 suck the flexible sheet workpiece 200; and
moving an arm 12 of a multi-articular robot 1 while turning the suction hand 2 relative to a surface 201a on which the flexible sheet workpiece 200 is placed in advance so as to remove the flexible sheet workpiece 200 from the surface 201a and hold the flexible sheet workpiece 200.
